# FASCICULE DE BREVET EUROPEEN

(11) **EP 2 714 492 B1**
(45) Date de publication et mention de la délivrance du brevet: **28.03.2018**
(21) Numéro de dépôt: 12728700.1
(22) Date de dépôt: 15.05.2012
(51) Int. Cl.: B62D 25/08, B62D 25/24, B60R 13/07

(54) **AUVENT DE VEHICULE AUTOMOBILE DONT L'OUVERTURE D'EVACUATION DES EAUX EST EQUIPEE D'UN MOYEN DE PROTECTION CONTRE LES REMONTEES D'EAU.**
MOTORHAUBE EINES KRAFTFAHRZEUGS MIT WASSERABFLUSSÖFFNUNG MIT EINER VORRICHTUNG ZUM SCHUTZ VOR WASSERAUFQUELLUNG
MOTOR VEHICLE COWL, THE WATER-DISCHARGE OPENING OF WHICH IS PROVIDED WITH A MEANS FOR PROTECTING AGAINST THE UPWELLING OF WATER

(30) Priorité: 31.05.2011 FR 1154755
(43) Date de publication de la demande: 09.04.2014
(73) Titulaire: PSA Automobiles SA, 78300 Poissy (FR)
(72) Inventeur: DUVAL, Michel, F-94600 Choisy Le Roi (FR)
(74) Mandataire: Fosse, Danièle
(86) Numéro de dépôt international: PCT/FR2012/051092
(87) Numéro de publication internationale: WO 2012/164193

(56) Documents cités:
- EP-A1- 0 480 838
- EP-A2- 0 947 415
- EP-A2- 1 595 771
- DE-A1-102005 045 292
- DE-U1- 20 008 485
- FR-A1- 2 913 657
- JP-A- 2000 006 842
- US-A- 3 158 176

## Description

La présente invention concerne un auvent de véhicule automobile dont le fond comporte au moins une ouverture d'évacuation des eaux de pluie et de lavage.

L'auvent d'un véhicule automobile est un corps creux en tôle situé entre le pare-brise et le compartiment moteur et permet de collecter les eaux de pluie et de lavage.

Au-dessus de cet auvent s'étend une grille d'auvent.

Le fond de l'auvent comporte de chaque côté une ouverture d'évacuation des eaux de pluie et de lavage.

Chacune des ouvertures est située au-dessus d'un passage de roue.

Ces ouvertures sont généralement munies d'un clapet dont le rôle est d'éviter la remontée des eaux projetées par les roues du véhicule.

Cependant, l'expérience a montré que des déchets tels que les feuilles des arbres, la boue et autres s'accumulent dans l'auvent et finissent par obstruer les clapets des ouvertures ci-dessus.

Ainsi, l'eau s'écoulant dans l'auvent monte dans celui-ci et risque de générer des incidents tels que des court-circuits dans les composants électriques situés à proximité de l'auvent et des entrées d'eau dans l'habitacle via l'entrée d'air du climatiseur et le filtre à pollen.

Un auvent de véhicule automobile tel que décrit dans le préambule de la revendication 1 est montré dans les documents JP 2000 006842 A et DE 200 08 485 U1.

Le but de la présente invention est de remédier aux inconvénients ci-dessus. Ce but est atteint, selon l'invention, grâce à un auvent de véhicule automobile tel que décrit par la revendication 1. Etant donné que l'ouverture située au fond de l'auvent est dépourvue de clapet, cette ouverture ne risque pas de s'obstruer du fait de l'accumulation de feuilles ou autres déchets.

Par ailleurs, la pièce s'étendant au-dessus de l'ouverture forme une barrière vis-à-vis pour briser les jets d'eau (appelés effet geyser) projetés par les roues et remontant à travers l'ouverture.

L'eau ainsi projetée ne risque ainsi pas d'atteindre l'entrée d'air dans l'habitacle et de provoquer les incidents exposés plus haut. En outre, comme la pièce dans l'invention est de forme arquée, sa partie centrale est située nettement au-dessus de l'ouverture et ne gêne nullement l'écoulement des eaux dans l'ouverture, tout en étant apte à briser les jets d'eau remontant à travers l'ouverture.

De préférence, ladite pièce est fixée de façon amovible au bord de l'ouverture pour permettre un montage et un démontage faciles de cette pièce.

Dans une version préférée de l'invention, l'ouverture est de forme allongée et ladite pièce s'étend dans la direction d'allongement de l'ouverture.

Selon une autre particularité avantageuse de l'invention, les dimensions de l'ouverture sont supérieures à la dimension de la grille d'auvent destinée à s'étendre au-dessus de l'auvent.

Ainsi, cette ouverture ne risque pas d'être obstruée par des déchets de grandes dimensions tels que des feuilles.

De préférence également, la largeur de ladite pièce est égale à la largeur de l'ouverture, pour recouvrir la totalité de la largeur de cette ouverture.

Ainsi, la pièce forme une barrière efficace pour briser les jets d'eau remontant à travers l'ouverture.

Dans un mode de réalisation particulièrement avantageux de l'invention, ladite pièce est en matière plastique et comporte à chacune de ses deux extrémités opposées une partie comportant une gorge ouverte vers l'extérieur, cette gorge étant engagée sur le bord de l'ouverture.

Cette disposition permet un montage et une fixation rapides et efficaces de la pièce en matière plastique.

Dans une variante de réalisation de l'invention, ladite pièce est réalisée d'une seule pièce avec l'auvent, par emboutissage.

Selon un autre aspect, l'invention concerne également un véhicule automobile équipé d'un auvent selon l'invention.

D'autres particularités et avantages de l'invention apparaîtront encore tout au long de la description ci-après.

Aux dessins annexés, donnés à titre d'exemples, non limitatifs :
- la figure 1 montre le pare-brise d'un véhicule automobile et l'auvent de celui-ci,
- la figure 2 est une vue en perspective de l'ouverture de collecte des eaux de l'auvent selon l'invention et de la pièce destinée à être fixée sur cette ouverture,
- la figure 3 est une vue en coupe suivant le plan III-III de la figure 2, après montage de la pièce sur l'ouverture,
- la figure 4 est une vue analogue à la figure 2 concernant une variante réalisée par emboutissage.

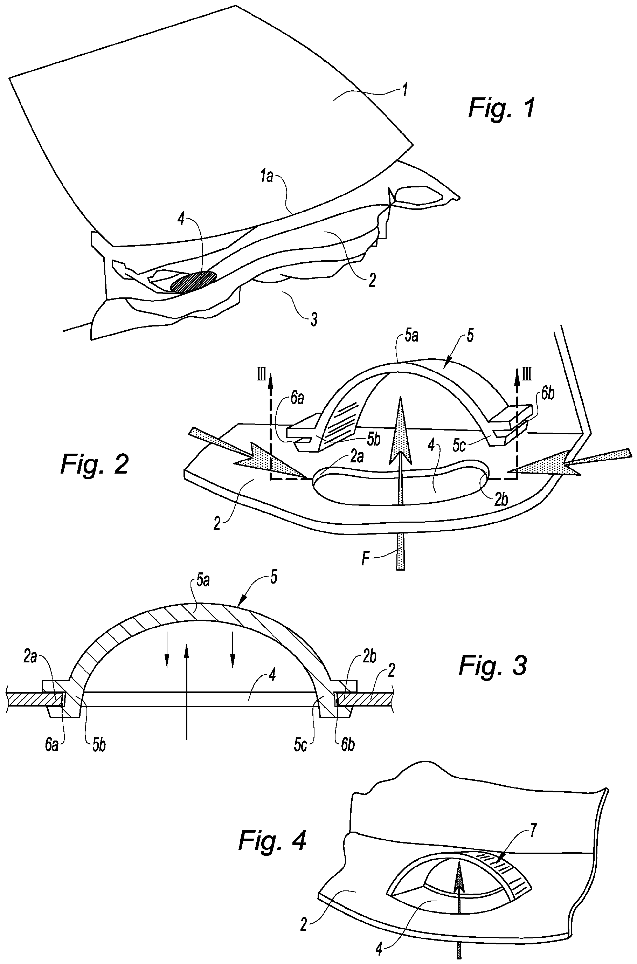

La figure 1 représente un pare-brise 1 et un auvent 2 qui s'étend entre le bord inférieur 1a du pare-brise et le compartiment moteur 3 du véhicule.

L'auvent 2 est constitué par une pièce moulée en matière plastique qui est recouverte par une grille d'auvent (non représentée).

Le fond de l'auvent 2 comporte de chaque côté une ouverture 4 d'évacuation des eaux de pluie et de lavage.

Cette ouverture 4 est représentée plus en détail sur la figure 2 et en coupe sur la figure 3.

Cette ouverture 4 se différentie des ouvertures d'auvent classiques par le fait qu'elle est dépourvue de clapet susceptible d'être obstrué par des déchets tels que des feuilles.

Par ailleurs, cette ouverture 4 est partiellement recouverte par une pièce 5 s'étendant entre deux zones opposées 2a, 2b du bord de l'ouverture 4, la partie centrale 5a de cette pièce 5 étant située au-dessus de l'ouverture 4 et distante de celle-ci.

Dans l'exemple représenté sur les figures 2 et 3, la pièce 5 est de forme arquée et chacune des deux extrémités opposées 5c, 5b de la pièce 5 est fixée de façon amovible dans les zones 2a, 2b du bord de l'ouverture 4.

Par ailleurs, l'ouverture 4 est de forme allongée et la pièce 5 s'étend dans la direction d'allongement de l'ouverture 4.

Les dimensions de l'ouverture 4 sont supérieures à la dimension de la grille d'auvent (non représentée) destinée à s'étendre au-dessus de l'auvent.

De ce fait, l'ouverture 4 ne risque pas d'être obstruée par des feuilles et est en mesure de collecter les eaux, même en cas de pluie torrentielle.

La largeur de la pièce 5 est de préférence égale à la largeur de l'ouverture 4, afin que la partie centrale 5a de la pièce 5 puisse former une barrière efficace pour briser les jets d'eau remontant à travers l'ouverture 4 dans le sens de la flèche F représentée sur les figures 2 et 3 et dus aux projections d'eau engendrées par la rotation des roues du véhicule.

La pièce 5 est en matière plastique et comporte à chacune de ses deux extrémités opposées 5b, 5c une partie comportant une gorge 6a, 6b ouverte vers l'extérieur, cette gorge étant engagée sur les zones 2a, 2b du bord de l'ouverture 4.

Cette disposition permet un montage et une fixation facile de la pièce 5 sur l'ouverture 4.

Il suffit en effet de déformer élastiquement la pièce 5 pour rapprocher ses extrémités opposées et de la relâcher pour que les gorges 6a, 6b s'engagent sur les zones 2a, 2b du bord de l'ouverture 4.

Dans la variante montrée sur la figure 4, la pièce 7 est réalisée d'une seule pièce avec l'auvent 2, lors de l'emboutissage.

Le mérite de la présente invention réside dans la simplicité et dans le faible coût de la solution qu'elle apporte au problème technique évoqué dans l'introduction de la présente description.

## Revendications

1. Auvent (2) de véhicule automobile dont le fond comporte au moins une ouverture (4) d'évacuation des eaux pluviales et de lavage, cette ouverture (4) étant dépourvue de clapet et partiellement recouverte par une pièce (5, 7), le auvent étant **caractérisé par le fait que** la pièce (5, 7) est de forme arquée et présente une partie centrale située distante de l'ouverture (4), ladite pièce (5, 7) s'étendant entre deux zones opposées (2a, 2b) du bord de l'ouverture (4) au-dessus de ladite ouverture, en amont de cette ouverture dans le sens d'évacuation des eaux pluviales et de lavage.

2. Auvent de véhicule automobile, selon la revendication 1, **caractérisé en ce que** chacune des deux extrémités opposées (5b, 5c) de ladite pièce (5) est fixée de façon amovible au bord de l'ouverture (4).

3. Auvent de véhicule automobile, selon l'une des revendications 1 et 2, **caractérisé en ce que** l'ouverture (4) est de forme allongée et ladite pièce (5) s'étend dans la direction d'allongement de l'ouverture.

4. Auvent de véhicule automobile, selon l'une des revendications 1 à 3, **caractérisé en ce que** les dimensions de l'ouverture (4) sont supérieures à la dimension d'une grille d'auvent destinée à s'étendre au-dessus de l'auvent (2).

5. Auvent de véhicule automobile, selon l'une des revendications 1 à 4, **caractérisé en ce que** la largeur de ladite pièce (5) est égale à la largeur de l'ouverture (4).

6. Auvent de véhicule automobile, selon l'une des revendications 1 à 5, **caractérisé en ce que** ladite pièce (5) est en matière plastique et comporte à chacune de ses deux extrémités opposées (5b, 5c) une partie comportant une gorge (6a, 6b) ouverte vers l'extérieur, cette gorge étant engagée sur le bord (2a, 2b) de l'ouverture (4).

7. Auvent de véhicule automobile, selon la revendication 1, **caractérisé en ce que** ladite pièce (7) est réalisée d'une seule pièce avec l'auvent, par emboutissage.

8. Véhicule automobile équipé d'un auvent (2) selon l'une des revendications 1 à 7.

## Patentansprüche

1. Kraftfahrzeug-Windlaufquerteil (2), dessen Grund mindestens eine Öffnung (4) zum Ableiten von Regen- und Waschwasser umfasst, wobei diese Öffnung (4) keine Klappe hat und teilweise von einem Teil (5, 7) abgedeckt ist, Windlaufquerteil **dadurch gekennzeichnet, dass** das Teil (5, 7) gewölbte Form hat und einen zentralen Teil aufweist, der von der Öffnung (4) entfernt liegt, wobei sich das Teil (5, 7) zwischen zwei gegenüberliegenden Zonen (2a, 2b) des Rands der Öffnung (4) oberhalb der Öffnung, stromaufwärts von dieser Öffnung in die Ableitungsrichtung des Regen- und Waschwassers erstreckt.

2. Kraftfahrzeug-Windlaufquerteil nach Anspruch 1, **dadurch gekennzeichnet, dass** jedes der zwei gegenüberliegenden Enden (5b, 5c) des Teils (5) abnehmbar an dem Rand der Öffnung (4) befestigt ist.

3. Kraftfahrzeug-Windlaufquerteil nach einem der Ansprüche 1 und 2, **dadurch gekennzeichnet, dass** die Öffnung (4) längliche Form hat, und dass sich das Teil (5) in die Ausstreckungsrichtung der Öffnung erstreckt.

4. Kraftfahrzeug-Windlaufquerteil nach einem der Ansprüche 1 bis 3, **dadurch gekennzeichnet, dass** die Maße der Öffnung (4) größer sind als das Maß eines Windlaufquerteilgitters, das dazu bestimmt ist, sich oberhalb des Windlaufquerteils (2) zu erstrecken.

5. Kraftfahrzeug-Windlaufquerteil nach einem der Ansprüche 1 bis 4, **dadurch gekennzeichnet, dass** die Breite des Teils (5) gleich der Breite der Öffnung (4) ist.

6. Kraftfahrzeug-Windlaufquerteil nach einem der Ansprüche 1 bis 5, **dadurch gekennzeichnet, dass** das Teil (5) aus Kunststoff besteht und an jedem seiner zwei gegenüberliegenden Enden (5b, 5c) einen Teil umfasst, der eine Nut (6a, 6b), die nach außen offen ist, umfasst, wobei diese Nut auf dem Rand (2a, 2b) der Öffnung (4) eingreift.

7. Kraftfahrzeug-Windlaufquerteil nach Anspruch 1, **dadurch gekennzeichnet, dass** das Teil (7) aus einem Stück mit dem Windlaufquerteil durch Stanzen hergestellt ist.

8. Kraftfahrzeug, das mit einem Windlaufquerteil (2) nach einem der Ansprüche 1 bis 7 ausgestattet ist.

## Claims

1. A motor vehicle cowl (2), the bottom of which comprises at least one opening (4) for discharging rainwater and wash water, this opening (4) being without a valve and being partially covered by a part (5, 7), the cowl being **characterized in that** the part (5, 7) is of arched shape and has a central portion situated remote from the opening (4), said part (5, 7) extending between two opposite zones (2a, 2b) of the edge of the opening (4) above said opening, upstream of this opening in the direction of discharging of the rainwater and wash water.

2. The motor vehicle cowl according to claim 1, **characterized in that** each of the two opposite ends (5b, 5c) of said part (5) is fixed detachably to the edge of the opening (4).

3. The motor vehicle cowl according to one of claims 1 and 2, **characterized in that** the opening (4) is of elongated shape and said part (5) extends in the direction of elongation of the opening.

4. The motor vehicle cowl according to one of claims 1 to 3, **characterized in that** the dimensions of the opening (4) are greater than the dimension of a cowl vent grille intended to extend above the cowl (2).

5. The motor vehicle cowl according to one of claims 1 to 4, **characterized in that** the width of said part (5) is equal to the width of the opening (4).

6. The motor vehicle cowl according to one of claims 1 to 5, **characterized in that** said part (5) is made of plastic material and comprises at each of its two opposite ends (5b, 5c) a portion comprising a groove (6a, 6b) which is open toward the exterior, this groove being engaged on the edge (2a, 2b) of the opening (4).

7. The motor vehicle cowl according to claim 1, **characterized in that** said part (7) is realized in a single piece with the cowl, by stamping.

8. A motor vehicle equipped with a cowl (2) according to one of claims 1 to 7.
